# FASCICULE DE BREVET EUROPEEN

(11) **EP 3 672 141 B1**
(45) Date de publication et mention de la délivrance du brevet: **07.06.2023**
(21) Numéro de dépôt: 19219015.5
(22) Date de dépôt: 20.12.2019
(51) Int. Cl.: H04L 9/06, H04L 9/32, G09C 1/00

(54) **PROCEDE DE VERIFICATION D'INTEGRITE ET DE DECHIFFREMENT D'UN MESSAGE CHIFFRE, CRYPTOMODULE ET TERMINAL ASSOCIES**
ÜBERPRÜFUNGSVERFAHREN DER INTEGRITÄT UND ENTSCHLÜSSELUNG EINER VERSCHLÜSSELTEN NACHRICHT, ENTSPRECHENDES KRYPTOMODUL UND ENDGERÄT
METHOD FOR VERIFYING THE INTEGRITY AND DECRYPTION OF AN ENCRYPTED MESSAGE, ASSOCIATED CRYPTOMODULE AND TERMINAL

(30) Priorité: 21.12.2018 FR 1873777
(43) Date de publication de la demande: 24.06.2020
(73) Titulaire: Airbus DS SLC, 78990 Elancourt (FR)
(72) Inventeur: MOUFFRON, Marc, 78470 Saint Remy les Chevreuse (FR); RENAULT, Nathalie, 78180 Montigny le Bretonneux (FR)
(74) Mandataire: Cabinet Camus Lebkiri

(56) Documents cités:
- US-A1- 2016 277 373
- Morris Dworkin: "NIST Special Publication 800-38D Recommendation for Block Cipher Modes of Operation: Galois/Counter Mode (GCM) and GMAC", NIST , 1 novembre 2007 (2007-11-01), XP055537161, Extrait de l'Internet: URL:https://nvlpubs.nist.gov/nistpubs/Lega cy/SP/nistspecialpublication800-38d.pdf

## Description

### DOMAINE TECHNIQUE DE L'INVENTION

Le domaine technique de l'invention est celui des procédés permettant de vérifier l'intégrité d'un message chiffré, puis le cas échéant, de le déchiffrer.

La présente invention concerne un procédé de vérification d'intégrité et de déchiffrement d'un message chiffré. La présente invention concerne également un cryptomodule, un terminal et un produit-programme d'ordinateur permettant la mise en oeuvre d'un tel procédé.

### ARRIERE-PLAN TECHNOLOGIQUE DE L'INVENTION

Le chiffrement avec authentification ou « authenticated encryption » en anglais est un mode de chiffrement permettant d'assurer à la fois la confidentialité, l'intégrité et l'authenticité des données chiffrées. Ce type de chiffrement est préconisé par la norme 3rd Génération Partnership Project (3GPP) régissant les réseaux mobiles de type « Mission Critical Services » ou MCS.

Un mode classique de chiffrement avec authentification est le mode « Galois Counter Mode » ou GCM. Le déchiffrement d'un message chiffré par le mode GCM nécessite le stockage de l'intégralité du message déchiffré avant de pouvoir vérifier son intégrité et le cas échéant, de pouvoir le délivrer en clair.

Ce mode de fonctionnement n'est pas compatible avec les cryptomodules, c'est-à-dire les composants électroniques utilisés pour la cryptographie, par exemple dans les téléphones portables ou les ordinateurs portables, qui comportent des mémoires ayant des capacités de stockage réduites. Ainsi, il est impossible pour le cryptomodule d'un téléphone portable de stocker l'intégralité d'une vidéo chiffrée.

Il existe donc un besoin de pouvoir déchiffrer un message chiffré dans un cryptomodule présentant une mémoire à la capacité de stockage réduite par un mode de chiffrement avec authentification, quelle que soit la taille du message chiffré.

### RESUME DE L'INVENTION

L'invention offre une solution aux problèmes évoqués précédemment, en permettant à un cryptomodule ayant une mémoire de capacité réduite de déchiffrer n'importe quel message chiffré par un mode de chiffrement avec authentification.

Un premier aspect de l'invention concerne un procédé de vérification d'intégrité et de déchiffrement d'un message chiffré comportant une pluralité de blocs de données Bi ordonnés pour i allant de 1 à N, N étant strictement supérieur à 1, le message chiffré étant stocké dans une mémoire d'un terminal, ledit terminal comportant un cryptomodule comprenant une mémoire de cryptomodule ayant une capacité de stockage inférieure à la taille du message chiffré, le procédé comportant les étapes suivantes réalisées par le cryptomodule :
- Stocker ou activer, dans la mémoire de cryptomodule, une clé d'intégrité CI propre au message chiffré ;
- Calculer un code d'intégrité initial I0 à l'aide de la clé d'intégrité CI et le stocker dans la mémoire de cryptomodule ;
- Générer une clé de vérification CV et la stocker dans la mémoire de cryptomodule ;
- Pour chaque bloc de données Bi :
   o Stocker le bloc de données Bi dans la mémoire de cryptomodule ;
   o Calculer un code d'intégrité intermédiaire li et le stocker dans la mémoire de cryptomodule :
      - Si le bloc de données Bi est le premier bloc de données B1 du message chiffré, le code d'intégrité intermédiaire I1 est calculé à l'aide de la clé d'intégrité CI, du premier bloc de données B1 et du code d'intégrité initial I0 ;
      - Sinon, le code d'intégrité intermédiaire li est calculé à l'aide de la clé d'intégrité CI, du bloc de données Bi et du code d'intégrité intermédiaire li-1 du bloc de données Bi-1 précédent le bloc de données Bi dans le message chiffré ;
   o Générer un code d'authentification Ai du bloc de données Bi à l'aide de la clé de vérification CV, le code d'authentification Ai dépendant du rang i du bloc de données Bi, et le transmettre au terminal ;
   o Effacer le bloc de données Bi de la mémoire de cryptomodule ;
- Analyser un code d'intégrité final In correspondant au code d'intégrité intermédiaire In du dernier bloc de données Bn du message chiffré pour vérifier l'intégrité du message chiffré, comprenant les sous-étapes suivantes :
   - Calcul d'une valeur d'intégrité à partir d'au moins une partie du code d'intégrité final In ;
   - Comparaison de la valeur d'intégrité à une valeur d'intégrité de référence prédéterminée, l'intégrité du message chiffré étant vérifiée si la valeur d'intégrité et la valeur d'intégrité de référence sont identiques ;
- Si l'intégrité du message chiffré est vérifiée :
   o Stocker ou activer, dans la mémoire de cryptomodule, une clé de déchiffrement CD propre au message chiffré ;
   o Pour chaque bloc de données Bi du message chiffré :
      - Stocker le bloc de données Bi dans la mémoire de cryptomodule ;
      - Recevoir du terminal le code d'authentification du bloc de données Bi et vérifier l'authenticité et le rang i du bloc de données Bi à l'aide de son code d'authentification Ai ;
      - Si l'authenticité et le rang i du bloc de données Bi sont vérifiés, déchiffrer le bloc de données Bi à l'aide de la clé de déchiffrement CD et le transmettre au terminal pour le stocker dans la mémoire du terminal ;
      - Effacer le bloc de données chiffré Bi et le bloc de données déchiffré Di de la mémoire de cryptomodule.

Grâce à l'invention, le message chiffré est divisé en plusieurs blocs. Son intégrité est vérifiée bloc par bloc et il est ensuite déchiffré bloc par bloc une fois l'intégrité de l'intégralité du message vérifiée. La mémoire du cryptomodule ne stocke donc jamais plus de deux blocs de données. De plus, le procédé est sécurisé par les codes d'authentification qui permettent d'ajouter un niveau de sécurité entre l'étape de vérification de l'intégrité et l'étape de déchiffrement du message chiffré.

Outre les caractéristiques qui viennent d'être évoquées dans le paragraphe précédent, le procédé selon un premier aspect de l'invention peut présenter une ou plusieurs caractéristiques complémentaires parmi les suivantes, considérées individuellement ou selon toutes les combinaisons techniquement possibles.

Selon un mode de réalisation, le procédé comporte une étape consistant à effacer ou désactiver la clé d'intégrité CI de la mémoire de cryptomodule et à effacer les codes d'intégrité li de la mémoire de cryptomodule, juste avant l'étape consistant à stocker ou activer, dans la mémoire de cryptomodule, une clé de déchiffrement CD propre au message chiffré.

Ainsi, la mémoire du cryptomodule stocke soit la clé d'intégrité CI, soit la clé de déchiffrement CD et non les deux, ce qui permet d'économiser de la capacité de stockage.

Selon un mode de réalisation, le procédé comporte une étape consistant à effacer ou désactiver la clé de vérification CV et la clé de déchiffrement CD.

Ainsi, le cryptomodule est opérationnel pour réaliser le procédé pour un autre message chiffré.

Selon un mode de réalisation pouvant être combiné au mode de réalisation précédent, les codes d'authentification Ai sont générés par un algorithme d'authentification à clé secrète utilisant la clé de vérification CV comme clé secrète.

Selon un exemple de ce mode de réalisation, l'algorithme d'authentification à clé secrète est l'algorithme HMAC SHA 256.

Ainsi, les codes d'authentification Ai générés et la clé utilisée nécessitent une capacité de stockage réduite.

Selon un mode de réalisation, la clé de vérification CV est générée aléatoirement.

Ainsi, cela évite d'avoir à stocker plusieurs clés de vérification CV dans la mémoire du cryptomodule.

Selon un premier mode de réalisation pouvant être combiné aux modes de réalisation précédents, le procédé est de type GCM pour « Galois Counter Mode ».

Selon un deuxième mode de réalisation, le procédé est de type CWC pour « Carter-Wegman Counter ».

Ainsi, le procédé utilise un mode de chiffrement avec authentification.

Selon un mode de réalisation pouvant être combiné aux modes de réalisation précédents, un bloc de données Bi comporte 512 bits.

Un deuxième aspect de l'invention concerne un terminal comportant un cryptomodule selon un troisième aspect de l'invention et une mémoire.

Selon un mode de réalisation, le terminal est compatible avec la norme 3GPP TS 33.180.

Un troisième aspect de l'invention concerne un cryptomodule configuré pour mettre en oeuvre les étapes du procédé selon un premier aspect de l'invention, comportant une mémoire de cryptomodule ayant une capacité de stockage inférieure à la taille du message chiffré.

Selon un exemple de ce mode de réalisation, la mémoire de cryptomodule a une capacité de stockage choisie pour stocker sensiblement la clé de vérification CV, les codes d'intégrité li, deux blocs de données Bi, Di ou un bloc de données chiffré Bi et un code d'authentification Ai, et la clé d'intégrité CI ou la clé de déchiffrement CD.

Ainsi, le nombre d'éléments à stocker dans la mémoire de cryptomodule est minimisé par rapport à un procédé à mode de chiffrement avec authentification classique.

Un quatrième aspect de l'invention concerne un produit programme d'ordinateur comprenant des instructions qui, lorsque le programme est exécuté par un ordinateur, conduisent celui-ci à mettre en oeuvre le procédé selon un premier aspect de l'invention.

L'invention et ses différentes applications seront mieux comprises à la lecture de la description qui suit et à l'examen des figures qui l'accompagnent.

### BREVE DESCRIPTION DES FIGURES

Les figures sont présentées à titre indicatif et nullement limitatif de l'invention.
- La figure 1 montre un schéma synoptique du procédé selon un premier aspect de l'invention.
- La figure 2 montre une représentation schématique d'un terminal selon un deuxième aspect de l'invention comportant un cryptomodule selon un troisième aspect de l'invention.

### DESCRIPTION DETAILLEE D'AU MOINS UN MODE DE REALISATION DE L'INVENTION

Sauf précision contraire, un même élément apparaissant sur des figures différentes présente une référence unique.

Un premier aspect de l'invention concerne un procédé 100 de vérification d'intégrité et de déchiffrement d'un message chiffré.

Le chiffrement d'un message est un processus de transformation du contenu du message de façon à le rendre inintelligible à toute personne autre que le destinataire détenteur d'une clé de déchiffrement lui permettant de réaliser le déchiffrement du message.

Le déchiffrement est le processus inverse du chiffrement qui consiste à transformer le contenu du message au moyen de la clé de déchiffrement pour le rendre à nouveau intelligible.

Un message chiffré est donc un message ayant subi un processus de chiffrement et qui est donc inintelligible pour les tiers.

L'intégrité d'un message est vérifiée si le message n'a subi aucune altération ou destruction volontaire ou accidentelle lors de son traitement, c'est-à-dire, par exemple, lors de son chiffrement, de son stockage ou encore de sa transmission, et que le message conserve donc un format permettant son déchiffrement.

Un mode de chiffrement devant vérifier l'intégrité d'un message chiffré avant de le déchiffrer est appelé chiffrement avec authentification. Le mode de chiffrement est par exemple de type « Galois-Counter Mode » ou GCM ou encore le « Carter-Wegman Counter » ou CWC.

Le message chiffré comporte au moins un bloc de données Bi, les blocs de données Bi étant ordonnés pour i allant de 1 à N. Ainsi, le bloc de données B3 est le troisième bloc de données Bi du message chiffré.

Par exemple, un bloc de données Bi comporte 512 bits.

Un troisième aspect de l'invention concerne un cryptomodule 200 permettant la mise en oeuvre du procédé selon un premier aspect de l'invention.

On entend par « cryptomodule » un composant électronique utilisé pour la cryptographie, c'est-à-dire pour le chiffrement/déchiffrement de messages.

Le cryptomodule 200 est par exemple une carte à puce ou une puce électronique.

Un deuxième aspect de l'invention concerne un terminal 300.

Le terminal 300 est par exemple un téléphone portable ou plus particulièrement un smartphone, une tablette ou encore un ordinateur portable.

Par exemple, le terminal 300 est compatible avec la norme 3GPP TS 33.180.

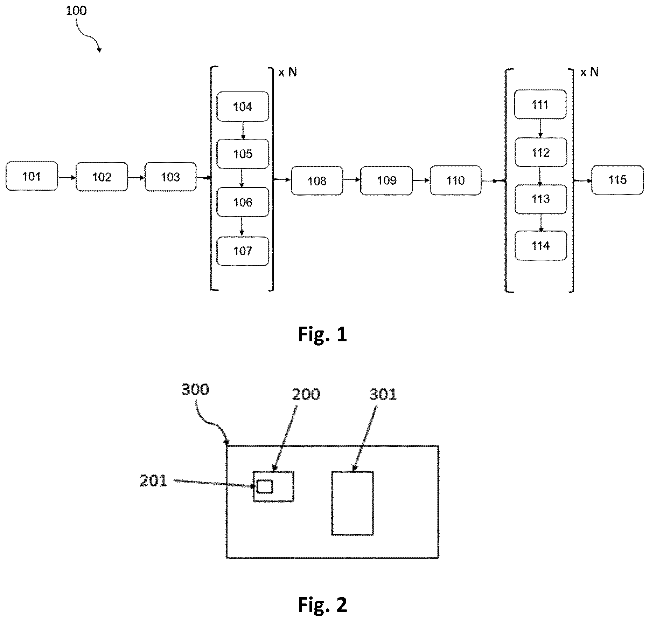

[Fig 2] montre une représentation schématique du terminal 300.

Le terminal 300 comporte une mémoire 301 et le cryptomodule 200.

Le cryptomodule 200 comporte une mémoire 201 ayant une capacité de stockage inférieure à la capacité de stockage de la mémoire 301 du terminal 300, en particulier, la mémoire 301 du terminal 300 a une capacité de stockage suffisante pour stocker le message chiffré alors que la mémoire 201 du cryptomodule 200 n'a pas une capacité de stockage suffisante pour stocker le message chiffré.

[Fig 1] montre un schéma synoptique du procédé 100 selon un premier aspect de l'invention.

Le procédé 100 selon un premier aspect de l'invention comporte plusieurs étapes mises en oeuvre par le cryptomodule 200.

Initialement, le message chiffré est stocké dans la mémoire 301 du terminal 300.

Lors d'une première étape 101 du procédé 100, le cryptomodule 200 stocke ou active dans sa mémoire 201 une clé d'intégrité CI propre au message chiffré. En effet, la clé d'intégrité CI du message chiffré peut être soit fournie au cryptomodule 200 au moment des opérations, soit présente a priori dans le cryptomodule 200 et une activation est alors suffisante pour pouvoir l'utiliser.

Quand la clé d'intégrité CI n'est pas présente a priori dans le cryptomodule 200, la première étape 101 du procédé 100 consiste, pour le cryptomodule 200, à sélectionner parmi les clés d'intégrité CI stockées dans le terminal 300, la clé d'intégrité CI correspondant au message chiffré.

A l'issue de la première étape 101 du procédé 100, le cryptomodule 200 peut utiliser la clé d'intégrité CI permettant de vérifier l'intégrité du message chiffré.

Lors d'une deuxième étape 102 du procédé 100, le cryptomodule 200 génère une clé de vérification CV et stocke la clé de vérification CV dans sa mémoire 201.

La clé de vérification CV est par exemple générée aléatoirement.

Lors de la troisième étape 103 du procédé 100, le cryptomodule 200 calcule un code d'intégrité initial I0 à partir de la clé d'intégrité CI. Une fois calculé, le code d'intégrité initial I0 est stocké dans la mémoire du cryptomodule 201.

Le code d'intégrité initial I0 est par exemple une fonction constante. Le code d'intégrité initial I0 est par exemple généré par l'algorithme AES (pour « Advanced Encryption Standard ») à partir de la clé d'intégrité Cl.

Les quatrième 104, cinquième 10, sixième 106 et septième 107 étapes du procédé 100 sont ensuite réalisées pour chaque bloc de données Bi du message chiffré.

Lors de la quatrième étape 104 du procédé 100, le cryptomodule 200 stocke un bloc de données Bi dans sa mémoire 201.

Lors de la cinquième étape 105 du procédé 100, le cryptomodule 200 calcule un code d'intégrité intermédiaire li. Ce code d'intégrité intermédiaire li est stocké dans la mémoire du cryptomodule 201.

Le code d'intégrité intermédiaire li est calculé à l'aide de la clé d'intégrité CI, du bloc de données Bi stocké et du code d'intégrité intermédiaire li-1 du bloc de données Bi-1 précédent le bloc de données Bi dans le message chiffré. Par exemple, le troisième code d'intégrité I3 est calculé à partir de la clé d'intégrité CI, du troisième bloc de données B3 et du deuxième code d'intégrité intermédiaire I2 calculé à partir du deuxième bloc de données B2.

Par exemple, le code d'intégrité intermédiaire li s'exprime de la manière suivante : li - (li-1 + Bi) * Cl.

Le code d'intégrité intermédiaire I1 du premier bloc de données B1 est calculé à l'aide de la clé d'intégrité CI, du bloc de données B1 stocké et du code d'intégrité initial I0.

Lors de la sixième étape 106 du procédé 100, le cryptomodule calcule un code d'authentification Ai pour le bloc de données Bi dépendant de son rang i dans le message chiffré.

Le code d'authentification Ai est calculé à l'aide de la clé de vérification CV. Par exemple, le code d'authentification Ai est calculé par un algorithme d'authentification à clé secrète utilisant la clé de vérification CV comme clé secrète. Ce type d'algorithme fonctionne avec une clé secrète de taille réduite et génère des codes d'authentification de taille réduite, ce qui est compatible avec la problématique de capacité de stockage réduite du cryptomodule 200.

Par exemple, l'algorithme d'authentification à clé secrète est l'algorithme HMAC SHA 256. La clé de vérification CV est de taille 256 bits et les codes d'authentification générés sont alors de 256 bits.

Le cryptomodule 200 envoie alors le code d'authentification Ai au terminal 300 pour qu'il le stocke dans sa mémoire 301.

Lors de la septième étape 107 du procédé 100, le cryptomodule 200 efface le bloc de données Bi traité de sa mémoire 201.

Une fois que les quatrième 104, cinquième 105, sixième 106 et septième 107 étapes du procédé 100 sont réalisées pour chaque bloc de données Bi du message chiffré, le cryptomodule 200 réalise une huitième étape 108 du procédé 100 qui consiste à analyser un code d'intégrité final In du terminal 300 pour vérifier l'intégrité du message chiffré.

Le code d'intégrité final In correspond au code d'intégrité intermédiaire In du dernier bloc de données Bn du message chiffré. Ainsi, le code d'intégrité final In dépend de tous les codes d'intégrité intermédiaires li calculés pour chaque bloc de données Bi et permet donc de vérifier l'intégrité de l'ensemble des blocs de données Bi et donc du message chiffré dans son ensemble.

L'analyse du code d'intégrité final In comporte une étape de calcul d'une valeur d'intégrité à partir d'au moins une partie du code d'intégrité final In, et une étape de comparaison de la valeur d'intégrité à une valeur d'intégrité de référence prédéterminée. La valeur d'intégrité et la valeur d'intégrité de référence sont par exemple des nombres dans un format prédéfini. Les différents formats possibles sont par exemple un format texte ou un format informatique tels que les formats integer, float ou encore double. La valeur d'intégrité est par exemple égale au code d'intégrité final In. L'intégrité est vérifiée si la valeur d'intégrité et la valeur d'intégrité de référence sont identiques et au contraire non vérifiée si la valeur d'intégrité et la valeur d'intégrité de référence sont différentes.

Si l'intégrité du message chiffré n'est pas vérifiée, le message chiffré ne peut être déchiffré. Le procédé 100 s'interrompt alors.

Si l'intégrité du message chiffré est vérifiée, il est alors possible, dans un mode de chiffrement avec authentification, de passer au déchiffrement du message chiffré.

Lors d'une neuvième étape 109 optionnelle du procédé 100, le cryptomodule 200 efface ou désactive la clé d'intégrité CI de sa mémoire 201 et efface les codes d'intégrité li de sa mémoire 201.

Lors d'une dixième étape 110 du procédé 100, le cryptomodule 200 stocke ou active dans sa mémoire 201 une clé de déchiffrement CD propre au message chiffré. En effet, la clé de déchiffrement CD du message chiffré peut être soit fournie au cryptomodule 200 au moment des opérations, soit présente a priori dans le cryptomodule 200 et une activation est alors suffisante pour pouvoir l'utiliser.

Quand la clé de déchiffrement CD n'est pas présente a priori dans le cryptomodule 200, la dixième étape 110 du procédé 100 consiste, pour le cryptomodule 200, à sélectionner parmi les clés de déchiffrement CD stockées dans le terminal 300, la clé de déchiffrement CD correspondant au message chiffré.

A l'issue de la dixième étape 110 du procédé 100, le cryptomodule 200 peut utiliser la clé de déchiffrement CD permettant de déchiffrer le message chiffré.

Les onzième 111, douzième 112, treizième 113 et quatorzième 114 étapes du procédé 100 sont ensuite réalisées pour chaque bloc de données Bi du message chiffré.

Lors de la onzième étape 111 du procédé 100, le cryptomodule 200 stocke un bloc de données Bi dans sa mémoire 201.

Lors de la douzième étape 112 du procédé 100, le cryptomodule 200 reçoit le code d'authentification Ai du bloc de données Bi traité.

Le cryptomodule 200 vérifie alors l'authenticité et le rang i du bloc de données Bi traité à l'aide de son code d'authentification Ai.

L'authenticité du bloc de données Bi est vérifiée si le bloc de données Bi n'a pas subi d'altérations depuis l'étape 106 de génération du code d'authentification Ai. Le code d'authentification Ai permet donc d'ajouter un niveau de sécurité entre l'étape 105 de vérification de l'intégrité du message chiffré et son déchiffrement et de s'assurer que le message qui va être déchiffré est bien le même message que celui dont l'intégrité a été précédemment vérifiée.

Si l'authenticité du bloc de données Bi n'est pas vérifiée, le message chiffré ne peut être déchiffré et le procédé 100 s'interrompt alors.

La vérification du rang i permet de s'assurer que les blocs de données Bi du message chiffré soient déchiffrés dans le même ordre que ne le sont les blocs de données Bi chiffrés correspondants dans le message chiffré pour qu'à la lecture du message déchiffré, les blocs de données Bi déchiffrés soient dans le bon ordre.

Si l'authenticité et le rang i du bloc de données Bi traité sont vérifiés, le cryptomodule 200 réalise la treizième étape 113 du procédé 100 qui consiste à déchiffrer le bloc de données Bi traité à l'aide de la clé de déchiffrement CD.

A l'issue de l'étape 113 de déchiffrement du bloc de données Bi, le bloc de données Bi déchiffré est stocké dans la mémoire 301 du terminal 300.

Lors de la quatorzième étape 114 du procédé 100, le cryptomodule 200 efface le bloc de données Bi traité de sa mémoire 201.

A l'issue des onzième 111, douzième 112, treizième 113 et quatorzième 114 étapes du procédé 100, le message chiffré est entièrement déchiffré et les blocs de données Bi déchiffrés sont stockés dans la mémoire 301 du terminal 300 dans le même ordre que le sont les blocs de données Bi chiffrés correspondants dans le message chiffré.

La mémoire 201 du cryptomodule 200 ne contient plus aucun bloc de données Bi.

Lors d'une quinzième étape 115 optionnelle du procédé 100, le cryptomodule 200 efface ou désactive la clé de vérification CV et la clé de déchiffrement CD de sa mémoire 201.Ainsi, à l'issue du procédé 100, la mémoire 201 du cryptomodule ne contient plus aucune clé active, ni aucun code ayant servi lors du procédé 100. Le cryptomodule 200 peut alors réaliser à nouveau le procédé 100 sur un autre message chiffré.

Ainsi, lors du procédé 100 illustré à la figure 1, la mémoire 201 du cryptomodule 200 ne comporte jamais plus de deux clés, soit la clé de vérification CV et la clé d'intégrité CI, soit la clé de vérification CV et la clé de déchiffrement CD, et jamais plus de deux blocs de données Bi, Di.

Ainsi, la mémoire du cryptomodule 200 peut avoir une capacité de stockage choisie pour lui permettre de stocker sensiblement la clé de vérification CV, les codes d'intégrité li, deux blocs de données Bi, Di ou un bloc de données chiffré Bi et un code d'authentification Ai et la clé d'intégrité CI ou la clé de déchiffrement CD.

## Revendications

1. Procédé (100) de vérification d'intégrité et de déchiffrement d'un message chiffré comportant une pluralité de blocs de données Bi ordonnés pour i allant de 1 à N, N étant strictement supérieur à 1, le message chiffré étant stocké dans une mémoire (301) d'un terminal (300), ledit terminal (300) comportant un cryptomodule (200) comprenant une mémoire de cryptomodule (201) ayant une capacité de stockage inférieure à la taille du message chiffré, le procédé (100) comportant les étapes suivantes réalisées par le cryptomodule (200) :
- Stocker ou activer, dans la mémoire de cryptomodule (201), une clé d'intégrité CI propre au message chiffré (101) ;
- Calculer un code d'intégrité initial I0 à l'aide de la clé d'intégrité CI et le stocker dans la mémoire de cryptomodule (201), (102) ;
- Générer une clé de vérification CV et la stocker dans la mémoire de cryptomodule (201), (103) ;
- Pour chaque bloc de données Bi :
∘ Stocker le bloc de données Bi dans la mémoire de cryptomodule (201), (104) ;
∘ Calculer un code d'intégrité intermédiaire li et le stocker dans la mémoire de cryptomodule (201), (105) :
• Si le bloc de données Bi est le premier bloc de données B1 du message chiffré, le code d'intégrité intermédiaire I1 est calculé à l'aide de la clé d'intégrité CI, du premier bloc de données B1 et du code d'intégrité initial I0 ;
• Sinon, le code d'intégrité intermédiaire li est calculé à l'aide de la clé d'intégrité CI, du bloc de données Bi et du code d'intégrité intermédiaire li-1 du bloc de données Bi-1 précédent le bloc de données Bi dans le message chiffré ;
∘ Générer un code d'authentification Ai du bloc de données Bi à l'aide de la clé de vérification CV, le code d'authentification Ai dépendant du rang i du bloc de données Bi, et le transmettre au terminal (106) ;
∘ Effacer le bloc de données Bi de la mémoire de cryptomodule (201), (107) ;
- Analyser un code d'intégrité final In correspondant au code d'intégrité intermédiaire In du dernier bloc de données Bn du message chiffré pour vérifier l'intégrité du message chiffré (108), comprenant les sous-étapes suivantes :
∘ Calcul d'une valeur d'intégrité à partir d'au moins une partie du code d'intégrité final In ;
∘ Comparaison de la valeur d'intégrité à une valeur d'intégrité de référence prédéterminée, l'intégrité du message chiffré étant vérifiée si la valeur d'intégrité et la valeur d'intégrité de référence sont identiques ;
- Si l'intégrité du message chiffré est vérifiée :
∘ Stocker ou activer, dans la mémoire de cryptomodule (201), une clé de déchiffrement CD propre au message chiffré (110) ;
∘ Pour chaque bloc de données Bi du message chiffré :
• Stocker le bloc de données Bi dans la mémoire de cryptomodule (201), (111) ;
• Recevoir du terminal (300) le code d'authentification du bloc de données Bi et vérifier l'authenticité et le rang i du bloc de données Bi à l'aide de son code d'authentification Ai (112) ;
• Si l'authenticité et le rang i du bloc de données Bi sont vérifiés, déchiffrer le bloc de données Bi à l'aide de la clé de déchiffrement CD et le transmettre au terminal (300) pour le stocker dans la mémoire du terminal (301), (113) ;
• Effacer le bloc de données chiffré Bi et le bloc de données déchiffré Di de la mémoire de cryptomodule (201), (114).

2. Procédé (100) selon la revendication 1, **caractérisé en ce qu'**il comporte une étape (109) consistant à effacer ou désactiver la clé d'intégrité CI de la mémoire de cryptomodule (201) et à effacer les codes d'intégrité li de la mémoire de cryptomodule (201), juste avant l'étape (110) consistant à stocker ou activer, dans la mémoire de cryptomodule (201), une clé de déchiffrement CD propre au message chiffré.

3. Procédé (100) selon l'une quelconque des revendications, **caractérisé en ce qu'**il comporte une étape (115) consistant à effacer ou désactiver la clé de vérification CV et la clé de déchiffrement CD.

4. Procédé (100) selon l'une quelconque des revendications précédentes, **caractérisé en ce que** les codes d'authentification Ai sont générés par un algorithme d'authentification à clé secrète utilisant la clé de vérification CV comme clé secrète.

5. Procédé (100) selon la revendication 4, **caractérisé en ce que** l'algorithme d'authentification à clé secrète est l'algorithme HMAC SHA 256.

6. Procédé (100) selon l'une quelconque des revendications, **caractérisé en ce que** la clé de vérification CV est générée aléatoirement.

7. Procédé (100) selon l'une quelconque des revendications précédentes, **caractérisé en ce qu'**il est de type GCM pour « Galois Counter Mode » ou de type CWC pour « Carter-Wegman Counter ».

8. Cryptomodule (200) configuré pour mettre en oeuvre les étapes du procédé (100) selon l'une quelconque des revendications 1 à 7, comportant une mémoire de cryptomodule (201) ayant une capacité de stockage inférieure à la taille du message chiffré.

9. Cryptomodule (200) selon la revendication 8, **caractérisé en ce que** la mémoire de cryptomodule (201) a une capacité de stockage choisie pour stocker sensiblement la clé de vérification CV, les codes d'intégrité li, deux blocs de données Bi, Di ou un bloc de données chiffré Bi et un code d'authentification Ai et la clé d'intégrité CI ou la clé de déchiffrement CD.

10. Terminal (300) comportant un cryptomodule (200) selon l'une quelconque des revendications 8 à 9 et une mémoire (301).

11. Terminal (300) selon la revendication 10, **caractérisé en ce qu'**il est compatible avec la norme 3GPP TS 33.180.

## Patentansprüche

1. Verfahren (100) zum Prüfen der Integrität und zum Entschlüssen einer verschlüsselten Nachricht, die eine Vielzahl von geordneten Datenblöcken Bi umfasst, wobei i zwischen 1 und N liegt und N zwingend größer als 1 ist, wobei die verschlüsselte Nachricht in einem Speicher (301) eines Endgeräts (300) gespeichert ist und das Endgerät (300) ein Kryptomodul (200) mit einem Kryptomodulspeicher (201) umfasst, dessen Speicherkapazität kleiner ist als die Größe der verschlüsselten Nachricht, wobei das Verfahren (100) folgende vom Kryptomodul (200) durchgeführte Schritte umfasst:
- Speichern oder Aktivieren eines der verschlüsselten Nachricht (101) eigenen Integritätsschlüssels CI im Kryptomodulspeicher (201);
- Berechnen mithilfe des Integritätsschlüssels CI eines ursprünglichen Integritätscodes I0 und diesen im Kryptomodulspeicher (201), (102) speichern;
- Generieren eines Prüfschlüssels CV und diesen im Kryptomodulspeicher (201), (103) speichern;
- Für jeden Datenblock Bi:
o Speichern des Datenblocks Bi im Kryptomodulspeicher (201), (104);
* Wenn der Datenblock Bi der erste Datenblock B1 der verschlüsselten Nachricht ist, wird der intermediäre Integritätscode I1 anhand des Integritätsschlüssels CI, des ersten Datenblocks B1 und des ursprünglichen Integritätscodes I0 berechnet;
* Wenn nicht, wird der intermediäre Integritätscode Ii anhand des Integritätsschlüssels CI, des Datenblocks Bi und des intermediären Integritätscodes li-1 des in der verschlüsselten Nachricht dem Datenblock Bi vorausgehenden Datenblocks Bi-1 berechnet;
o Generieren eines Authentifizierungscodes Ai des Datenblocks Bi anhand des Prüfschlüssels CV, wobei der Authentifizierungscode Ai vom Rang i des Datenblocks Bi abhängt, und diesen Authentifizierungscode an das Endgerät (106) übermitteln;
o Löschen des Datenblocks Bi aus dem Kryptomodulspeicher (201), (107);
- Analysieren eines dem intermediären Integritätscode In des letzten Datenblocks Bn der verschlüsselten Nachricht entsprechenden endgültigen Integritätscodes, um die Integrität der verschlüsselten Nachricht (108) zu prüfen, wobei dieser Schritt folgende Unterschritte umfasst:
o Berechnen eines Integritätswertes ausgehend von mindestens einem Teil des endgültigen Integritätscodes In;
o Vergleichen des Integritätswertes mit einem vordefinierten Referenz-Integritätswert, wobei die Integrität der verschlüsselten Nachricht als geprüft gilt, wenn der Integritätswert und der Referenz-Integritätswert identisch sind;
- Wenn die Integrität der verschlüsselten Nachricht überprüft ist:
o Speichern oder Aktivieren eines der verschlüsselten Nachricht (110) eigenen Entschlüsselungsschlüssels CD im Kryptomodulspeicher (201);
o Für jeden Datenblock Bi der verschlüsselten Nachricht:
* Speichern des Datenblocks Bi im Kryptomodulspeicher (201), (111);
* Vom Endgerät (300) den Authentifizierungscode des Datenblocks Bi erhalten und die Authentizität und den Rang i des Datenblocks Bi anhand seines Authentifizierungscodes Ai (112) überprüfen;
* Wenn die Authentizität und der Rang i des Datenblocks Bi geprüft sind, den Datenblock Bi anhand des Entschlüsselungsschlüssels CD entschlüsseln und ihn an das Endgerät (300) übertragen, um ihn im Speicher des Endgeräts (301), (113) zu speichern;
* Löschen des verschlüsselten Datenblocks Bi und des entschlüsselten Datenblocks Di aus dem Kryptomodulspeicher (201), (114).

2. Verfahren (100) gemäß Anspruch 1, **dadurch gekennzeichnet, dass** es einen Schritt (109) umfasst, der darin besteht, den Integritätsschlüssel CI aus dem Kryptomodulspeicher (201) zu löschen oder zu deaktivieren und kurz vor dem Schritt (110) des Speicherns oder Aktivierens eines der verschlüsselten Nachricht eigenen Entschlüsselungsschlüssels CD im Kryptomodulspeicher (201) die Integritätscodes li aus dem Kryptomodulspeicher (201) zu löschen.

3. Verfahren (100) nach einem der vorausgehenden Ansprüche, **dadurch gekennzeichnet, dass** es einen Schritt (115) umfasst, der darin besteht, den Prüfschlüssel CV und den Entschlüsselungsschlüssel CD zu löschen oder zu deaktivieren.

4. Verfahren (100) nach einem der vorausgehenden Ansprüche, **dadurch gekennzeichnet, dass** die Authentifizierungscodes Ai durch einen Authentifizierungsalgorithmus mit Geheimschlüssel, der den Prüfschlüssel CV als Geheimschlüssel verwendet, generiert werden.

5. Verfahren (100) nach Anspruch 4, **dadurch gekennzeichnet, dass** es sich beim Authentifizierungsalgorithmus mit Geheimschlüssel um den Algorithmus HMAC SHA 256 handelt.

6. Verfahren (100) nach einem der vorausgehenden Ansprüche, **dadurch gekennzeichnet, dass** der Prüfschlüssel CV nach dem Zufallsprinzip generiert wird.

7. Verfahren (100) nach einem der vorausgehenden Ansprüche, **dadurch gekennzeichnet, dass** es sich um ein GCM-Typ-Verfahren (für "Galois Counter Mode") bzw. um ein CWC-Typ-Verfahren (für "Carter-Wegman Counter") handelt.

8. Konfiguriertes Kryptomodul (200) für die Anwendung der Verfahrensschritte (100) nach einem der Ansprüche 1 bis 7, mit einem Kryptomodulspeicher (201), dessen Speicherkapazität kleiner ist als die Größe der verschlüsselten Nachricht.

9. Kryptomodul (200) nach Anspruch 8, **dadurch gekennzeichnet, dass** der Kryptomodulspeicher (201) eine so gewählte Speicherkapazität hat, dass im Wesentlichen der Prüfschlüssel CV, die Integritätscodes Ii, zwei Datenblöcke Bi, Di oder ein verschlüsselter Datenblock Bi und ein Authentifizierungscode Ai und der Integritätsschlüssel CI oder der Entschlüsselungsschlüssel CD gespeichert werden können.

10. Endgerät (300) mit einem Kryptomodul (200) nach einem der Ansprüche 8 bis 9 und einem Speicher (301).

11. Endgerät (300) nach Anspruch 10, **dadurch gekennzeichnet, dass** es mit der Norm 3GPP TS 33.180 kompatibel ist.

## Claims

1. Method (100) for verification of integrity and decryption of an encrypted message comprising a plurality of ordered data blocks Bi for i ranging from 1 to N, N being strictly greater than 1, the encrypted message being stored in a memory (301) of a terminal (300), said terminal (300) comprising a cryptomodule (200) including a cryptomodule memory (201) having a storage capacity inferior to the size of the encrypted message, the method (100) comprising the following steps carried out by the cryptomodule (200):
- Storing or activating, in the cryptomodule memory (201), an integrity key Cl specific to the encrypted message (101);
- Calculating an initial integrity code I0 using the integrity key CI and storing it in the cryptomodule memory (201), (102);
- Generating a verification key CV and storing it in the cryptomodule memory (201), (103);
- For each data block Bi:
o Storing the data block Bi in the cryptomodule memory (201), (104);
o Calculating an intermediate integrity code li and storing it in the cryptomodule memory (201), (105):
1. If the data block Bi is the first data block B1 of the encrypted message, the intermediate integrity code I1 is calculated using the integrity key Cl, the first data block B1 and the initial integrity code I0;
2. If not, the intermediate integrity code li is calculated using the integrity key Cl, the data block Bi and the intermediate integrity code li-1 of the data block Bi-1 preceding the data block Bi in the encrypted message;
o Generating an authentication code Ai of the data block Bi using the verification key CV, the authentication code Ai depending on the row i of the data block Bi, and transmitting it to the terminal (106);
o Deleting the data block Bi from the cryptomodule memory (201), (107);
- Analysing a final integrity code In corresponding to the intermediate integrity code In of the last data block Bn of the encrypted message to verify the integrity of the encrypted message (108) comprising the following sub-steps :
o Calculating an integrity value from at least one part of the final integrity code In ;
o Comparing the integrity value to a predetermined reference integrity value, the integrity of the message being verified if the integrity value and the reference integrity value are identical;
- If the integrity of the encrypted message is verified:
o Storing or activating, in the cryptomodule memory (201), a decryption key CD specific to the encrypted message (110);
o For each data block Bi of the encrypted message:
1. Storing the data block Bi in the cryptomodule memory (201), (111);
2. Receiving from the terminal (300) the authentication code of the data block Bi and verifying the authenticity and the row i of the data block Bi using its authentication code Ai (112);
3. If the authenticity and the row i of the data block Bi are verified, decrypting the data block Bi using the decryption key CD and transmitting it to the terminal (300) for storing it in the memory of the terminal (301), (113);
4. Deleting the encrypted data block Bi and the decrypted data block Di from the cryptomodule memory (201), (114).

2. Method (100) according to claim 1, **characterised in that** it comprises a step (109) consisting in deleting or deactivating the integrity key CI of the cryptomodule memory (201) and in deleting the integrity codes li of the cryptomodule memory (201), just before the step (110) consisting in storing or activating, in the cryptomodule memory (201), a decryption key CD specific to the encrypted message.

3. Method (100) according to any of the claims, **characterised in that** it comprises a step (115) consisting in deleting or deactivating the verification key CV and the decryption key CD.

4. Method (100) according to any of the preceding claims, **characterised in that** the authentication codes Ai are generated by a secrete key authentication algorithm using the verification key CV as secrete key.

5. Method (100) according to claim 4, **characterised in that** the secrete key authentication algorithm is the algorithm HMAC SHA 256.

6. Method (100) according to any of the claims, **characterised in that** the verification key CV is generated randomly.

7. Method (100) according to any of the preceding claims, **characterised in that** it is of GCM (Galois Counter Mode) or CWC (Carter Wegman Counter) type.

8. Cryptomodule (200) configured to implement the steps of the method (100) according to any of claims 1 to 7, comprising a cryptomodule memory (201) having a storage capacity inferior to the size of the encrypted message.

9. Cryptomodule (200) according to claim 8, **characterised in that** the cryptomodule memory (201) has a storage capacity chosen to store substantially the verification key CV, the integrity codes li, two data blocks Bi, Di or an encrypted data block Bi and an authentication code Ai and the integrity key CI or the decryption key CD.

10. Terminal (300) comprising a cryptomodule (200) according to any of claims 8 to 9 and a memory (301).

11. Terminal (300) according to claim 10, **characterised in that** it is compatible with the 3GPP TS 33.180 technical specification.
